# EUROPEAN PATENT SPECIFICATION

(11) **EP 4 021 859 B1**
(45) Date of publication and mention of the grant of the patent: **25.10.2023**
(21) Application number: 20789425.4
(22) Date of filing: 16.09.2020
(51) Int. Cl.: C02F 1/52, C02F 1/44, C02F 1/66, C02F 101/10, C02F 101/20, C02F 103/10

(54) **SIMPLIFIED SULPHATE REMOVAL FOR EFFLUENT TREATMENT**
VEREINFACHTE SULFATENTFERNUNG ZUR ABWASSERBEHANDLUNG
ÉLIMINATION SIMPLIFIÉE DE SULFATE POUR LE TRAITEMENT D'EFFLUENTS

(30) Priority: 26.09.2019 ZA 201906328
(43) Date of publication of application: 06.07.2022
(73) Proprietor: Mintek, 2194 Randburg (ZA)
(72) Inventor: NETSHIKHUDINI, Tshamano, 2194 Randburg (ZA); VAN STADEN, Petrus Johannes, 2194 Randburg (ZA)
(74) Representative: Stephenson, Philip
(86) International application number: PCT/ZA2020/050049
(87) International publication number: WO 2021/062450

(56) References cited:
- JP-A- 2006 036 699
- US-A1- 2014 144 843
- US-A1- 2019 002 311

## Description

### BACKGROUND OF THE INVENTION

This invention relates to reducing the sulphate content of waste and effluent waters. The document US2019/002311 A1 describes such a method. In this method aluminium trihydroxide and lime are added to a sulphate bearing stream in the form of ettringite.

International patent application number PCT/GB98/01610 describes a process referred to as "the SAVMIN process", which is concerned with the treatment of relatively high-sulphate-containing waste/effluent waters. These waters typically contain base- and heavy-metals and dissolved elements such as silicon and magnesium, which are first removed in a metal-trihydroxide precipitation step at an elevated pH (about 12), resulting in an aqueous decant saturated in gypsum, CaSO₄.2H₂O, which bears about 1.5 g/L sulphate, i.e. too high for disposal or for use.

A chemically-reactive aluminium-salt such as aluminium trihydroxide, Al(OH)₃, plus lime Ca(OH)₂, are added to the sulphate-bearing water at a high pH (about 12), upon which ettringite [Al₂(SO₄)₃.6Ca(OH)₂.26H₂O] forms. The ettringite possesses very low solubility and hence resides in equilibrium with an aqueous sulphate concentration in the product water as low as 200 ppm. Due to the high dosage of aluminium-salts required for the treatment of such high-sulphate-bearing water, a distinguishing economising feature of the SAVMIN process is the recovery of the aluminium from the ettringite for recycling as aluminium trihydroxide. This requires the introduction of an ettringite-destruction step by lowering the pH to yield aluminium trihydroxide and gypsum. The aluminium trihydroxide and gypsum are separated from one another in a solid-solid separation step whereafter the gypsum is discarded and the aluminium trihydroxide is re-used for ettringite formation.

There are however other sulphate removal operations with different requirements for example, a solution which has a sulphate concentration that is lower than what would result in gypsum-saturation in the feed water to be treated; a less stringent specification for the sulphate content of the product water; a small available area for plant footprint; a limited plant capex budget for plant; and infrequent or intermittent sulphate removal plant operation. For such operations it can be more economical, or at least more practical, to adopt a simpler process that still relies on ettringite formation but without the added complications of metal-hydroxide precipitation, ettringite destruction and aluminium trihydroxide recycle.

It might be considered merely to add aluminium trihydroxide and lime to sulphate-bearing water (the sulphate content being represented here by CaSO₄) to form ettringite according to the following equation:

2Al(OH)₃₍ₛ₎ + 3CaSO_{4(aq)} + 3Cₐ(OH)_{2(aq)} + 26H₂O = Ca₆Al₂(OH)₁₂(SO₄)_{3.}26H₂O₍ₛ₎ [1]

The aqueous phase could then be decanted as "sulphate-free" water and the ettringite discarded, constituting such a hypothetical simplified process. However, the proposed process would not be workable since it has been found that industrially purchased aluminium trihydroxide is chemically inactive. The aluminium trihydroxide must be prepared in-situ, as occurs during the ettringite destruction phase in the SAVMIN process, in order to be chemically reactive. The option of generating reactive aluminium trihydroxide by ettringite destruction is, however, not available in the proposed simplified process for which the ettringite destruction step would have been eliminated.

Alternatively, it is noted that the aluminium trihydroxide formed by the hydrolysis of aluminium sulphate, Al₂(SO₄)₃, is also chemically reactive. That occurs according to:

Al₂(SO₄)₃₍ₛ₎ + 6H₂O = 2Al(OH)₃₍ₛ₎ + 3H₂SO_{4(aq)} [2a]

The sulphate which is present as sulphuric acid, H₂SO₄, could be immobilised as gypsum by the addition of lime according to:

3H₂SO_{4(aq)} + 3Ca(OH)₂ = 3CaSO_{4.}2H₂O₍ₛ₎ [2b]

The over-all reaction, namely the sum of [2]a and [2]b, is:

Al₂(SO₄)₃₍ₛ₎ + 3Ca(OH)₂ + 6H₂O = 2Al(OH)₃₍ₛ₎ + 3CaSO₄.2H₂O₍ₛ₎ [2]

However, the associated amount of sulphate that appears with the aluminium trihydroxide in suspension (either the sulphate associated with the H₂SO₄ in the reaction 2[a] or the sulphate associated with the gypsum in the reaction 2[b]), with the gypsum re-dissolving as soon as any reaction such as reaction [1] takes place (which removes sulphate from solution), constitutes the exact amount of sulphate that would immobilise that aluminium trihydroxide in ettringite according to the reaction [1], as soon as the pH is raised sufficiently high. This leaves no residual aluminium trihydroxide available for removing sulphate from any externally introduced sulphate-bearing stream. Hence the proposal, in isolation, does not offer a simplified manner for the generation of aluminium trihydroxide with which sulphate can be removed by ettringite formation from any externally introduced stream which is to be treated.

### SUMMARY OF THE INVENTION

The invention proposes the production of chemically-reactive aluminium trihydroxide from the hydrolysis of aluminium sulphate in accordance with the reaction [2a]. Sulphate is then immobilised as gypsum by the addition of lime according to the reaction [2b]. This is followed by a solid-solid separation step to produce a discardable gypsum stream and a separate aluminium trihydroxide stream. The latter stream is utilised for sulphate removal from an externally introduced sulphate-bearing stream without interference of the sulphate derived from the aluminium sulphate used as an aluminium source in the hydrolysis step.

Lime is added in a quantity stoichiometrically sufficient to bind all the sulphate derived from the aluminium sulphate according to the reaction [2b].

The aluminium trihydroxide is not recovered from the ettringite as is the case in the SAVMIN process. The need for ettringite destruction and the recycling of aluminium trihydroxide is thereby eliminated. This process does however sacrifice the economising recovery of the aluminium trihydroxide from the ettringite (a benefit which is offered by the SAVMIN process).

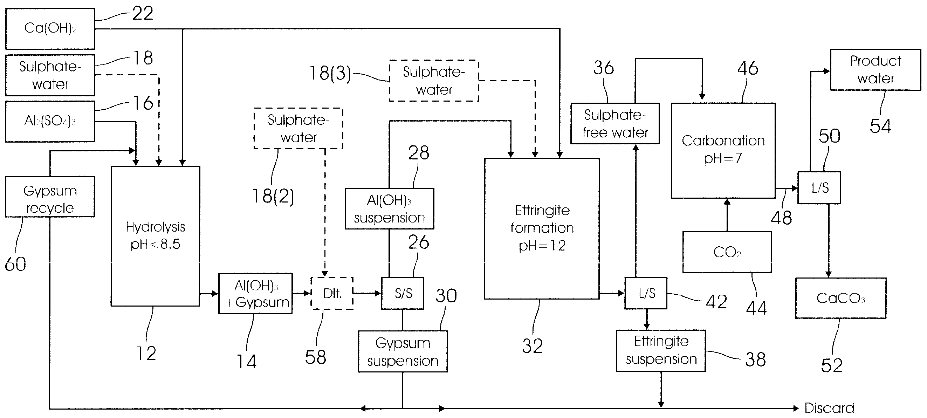

### BRIEF DESCRIPTION OF THE DRAWING

The invention is further described by way of example with reference to the accompanying drawing which is a flowsheet representation of a process according to the invention.

### DESCRIPTION OF PREFERRED EMBODIMENT

In a first hydrolysis step 12 carried out at a pH which is lower than pH 8.5, a stream 14 containing chemically reactive aluminium trihydroxide and gypsum is formed by the hydrolysis of aluminium sulphate 16 in accordance with the reaction [2a]. This is similar to what occurs in the ettringite destruction step of the SAVMIN process.

Sulphate-bearing water 18 which is to be treated enters the process at the hydrolysis step 12 without the need for a high pH metal trihydroxide precipitation step. Hence this process differs from the SAVMIN process in that the water 18 which is to be treated can enter the process at its naturally occurring pH which would typically be too low for ettringite formation upon contact with the aluminium trihydroxide.

Lime 22 is added in a quantity at least stoichiometrically sufficient to bind all of the sulphate introduced by the aluminium sulphate 16 as gypsum according to the reaction [2b]. This is another distinguishing feature since the SAVMIN process does not disclose the addition of aluminium sulphate and alkali in the same step.

Although the sulphate-bearing water 18 is in contact with the chemically reactive aluminium trihydroxide in the hydrolysis step 12, no ettringite will form provided the pH during the execution of this step is kept below pH 8.5. Such a relatively low pH should be maintained naturally since the hydrolysis of aluminium sulphate is acid-producing in accordance with reaction [2a]. In fact the addition of an alkali such as the lime Ca(OH)₂ (22) is required to effect the reaction [2b] in order to keep the pH above the natural pH of the aqueous aluminium sulphate 16 (about pH 3.5) provided it is kept below pH 8.5 so that ettringite formation is not initiated.

The resulting stream 14 of aluminium trihydroxide and gypsum produced according to the reaction [2] is subjected to a solid-solid separation step 26 to produce aluminium trihydroxide 28 in suspension and a gypsum by-product 30. This step serves the same purpose as the solid-solid separation step in the SAVMIN process. The underflow of the solid-solid separation step bears the gypsum 30 which is discarded. The overflow bears the aluminium trihydroxide suspension 28 and the majority of the watery phase which proceeds to an ettringite formation step 32 in which the pH is raised sufficiently high, typically to about pH 12, to result in ettringite formation according to the reaction [1].

The aqueous phase 36, decanted from the ettringite 38 in a liquid-solid separation step 42, undergoes the same treatment as that prescribed by the SAVMIN process namely carbonation by carbon dioxide gas (CO₂) 44 in a step 46. The resulting stream 48 is subjected to a liquid-solid separation step (filtering or settling) 50 to remove residual calcium as calcite (CaCOs) 52 and to yield a product water 54.

### Benefits

A first significant simplifying feature of this process compared to the SAVMIN process is that any heavy and base metals and dissolved elements such as silicon and magnesium entering with the sulphate-bearing water 18 to be treated will also precipitate in the ettringite formation step 32. These elements can then be disposed of together with the ettringite. In the SAVMIN process such elements must be removed in a separate metal-trihydroxide-precipitation step prior to the introduction of the sulphate-bearing water into the ettringite formation step.

Significant savings in plant cost and footprint result by eliminating: (a) the metal-trihydroxide precipitation reactor, (b) the metal-trihydroxide solid-liquid separation step, (c) the ettringite destruction step with its associated piping and controls, (d) a requirement for sulphuric acid storage, make-up, pumping/dosing and control to assist with ettringite destruction, and (e) piping and controls for aluminium trihydroxide recycle.

The process of the invention provides a significant simplification of operation and control. The SAVMIN process requires simultaneous control of aluminium-sulphate addition (for replenishment of aluminium lost from the circuit) and of sulphuric acid addition (for pH control of the ettringite destruction step). This is complicated in that each of these reagents has an acid-balance implication since the hydrolysis of aluminium sulphate also produces sulphuric acid. In the current process, all pH control loops only utilise lime addition as a manipulated variable to control pH. All other flows can either be set to pre-determined constant values or can be proportioned to the flows of other streams.

Because of the reduction in plant and operating volume, the process is quicker to stabilise towards a steady state and hence towards optimal performance. This is of particular benefit to the case where the process might only need to be operated intermittently.

The process of the invention also reduces the amount of gypsum required to be separated from the aluminium trihydroxide. In the process, 1.5 moles of gypsum are produced during the hydrolysis step 12 for every mole of aluminium trihydroxide according to the reaction [2]. In the SAVMIN process, due to additional sulphate being added for the purpose of ettringite destruction, up to 4.6 moles gypsum are presented to the solid-solid separation step per mole of aluminium trihydroxide. The exact proportion depends on the combination of aluminium sulphate and sulphuric acid being used for ettringite destruction in the SAVMIN process. This benefit helps to yield a much cleaner separation between the aluminium trihydroxide and the gypsum than is achievable in the SAVMIN process. There is also a reduction in the amounts of aluminium trihydroxide and of lime to be dosed to the ettringite formation step, since the aluminium trihydroxide recycle step in the SAVMIN process invariably contains some entrained gypsum which requires additional aluminium trihydroxide and lime to be added to the ettringite formation.

Depending on the particular case, it might be preferable to introduce the sulphate-bearing water 18 which is to be treated, at any one, two or all three of (a) the hydrolysis step 12, (b) ahead of the solid-solid separation step 26 as dilution water 58, and (c) at the ettringite formation step 32. The two latter possibilities are indicated respectively in dotted outline 18(2) and 18(3).

Depending on the particular case, the proportions in which the addition of the lime (22) is spread between the hydrolysis step (12) and the ettringite formation step (32) can be varied, within the limitation of providing at least sufficient Ca in the hydrolysis step 12 to immobilise (as gypsum) all sulphate introduced by the aluminium sulphate according to the reaction [2b].

To improve the separation between the aluminium trihydroxide 28 and the gypsum 30, the gypsum particles might be grown larger by recycling a proportion of the gypsum from the solid-solid separation step 26 back to the hydrolysis step 12 (stream 60). (It is known that aluminium trihydroxide particles that may be entrained with the gypsum recycle do not grow during recycle, whereas the gypsum particles grow preferentially).

The recycled gypsum stream 60 could be added directly to the hydrolysis step 12. Alternatively the stream 60 can be mixed with at least one of the incoming streams of the sulphate water 18, the lime 22 and the aluminium sulphate 16. Preferably, as illustrated in the attached flowsheet, the stream 60 is added to the aluminium sulphate 16 before the hydrolysis step 12. By mixing the gypsum stream 60 with one or more of the aluminium sulphate 16, the sulphate water 18 and the lime 22 (prior to hydrolysis) the gypsum is exposed in a higher concentration to the species in the incoming stream or streams - a factor which could accelerate or render more efficient the reactions that occur during the hydrolysis step 12 between the gypsum and such species.

Once the process is operational it can, optionally, be converted to the SAVMIN process by recirculating the ettringite 38 to the hydrolysis step 12 instead of discarding it. However, if the sulphate-bearing water 18 contains significant amounts of base- and heavy-metals or soluble elements such as silicon and magnesium, those elements should preferably be removed in an additional metal-hydroxide removal step prior to introduction thereof to the hydrolysis step 12 or the ettringite formation step 32. That would prevent the recycled ettringite from being contaminated with hydroxides of the elements, an occurrence which could otherwise add to the reagent consumption (by dissolving during the hydrolysis step 12 and precipitating in the ettringite formation step 32) and might reduce the efficiency of the solid-solid separation step by adding to the solid mass to be separated.

Similar to the SAVMIN process, the process of the present invention will not remove alkali metals such as sodium or potassium, nor soluble anions such as chlorides or nitrates from solution. If such removal is required, this process would have to be operated in series with another process capable of removing those species such as, for example, a membrane- or resin-based process.

## Claims

1. A method of treating a sulphate-bearing stream (18) comprising aluminium sulphate (16) which includes the steps of hydrolysing (12) the aluminium sulphate, at a pH below 8.5 and above 3.5, to produce a chemically-reactive aluminium trihydroxide and sulphuric acid, adding a quantity of lime (22) which is stoichiometrically sufficient to immobilize the sulphate introduced by the aluminium sulphate as gypsum, subjecting the resulting stream (14) to a solid-solid separation step (26) to produce a discardable gypsum stream (30) and a separated aluminium trihydroxide stream (28), using the separated aluminium trihydroxide stream (28) to remove sulphate from an externally introduced sulphate-bearing stream (18(3)) without interference of sulphate derived from the aluminium sulphate (16) used as an aluminium source in the hydrolysis step (12), and forming ettringite (32) by raising the pH of the separated aluminium trihydroxide stream (28).

2. A method according to claim 1 wherein the ettringite is subjected to a liquid-solid separation step (42) to decant an aqueous phase (36), subjecting the aqueous phase to carbonation (46) by carbon dioxide to produce a resulting stream, and subjecting the resulting stream to a liquid-solid separation step (50) to remove residual calcium and calcite to yield a product water (54).

## Patentansprüche

1. Verfahren zum Behandeln eines sulfathaltigen Stroms (18), der Aluminiumsulfat (16) umfasst, das die folgenden Schritte beinhaltet:
Hydrolysieren (12) des Aluminiumsulfats bei einem pH-Wert unter 8,5 und über 3,5, um ein chemisch reaktives Aluminiumtrihydroxid und Schwefelsäure zu produzieren,
Zugeben einer Menge an Kalk (22), die stöchiometrisch ausreicht, um das durch das Aluminiumsulfat eingeleitete Sulfat als Gips zu immobiliseren,
Unterziehen des resultierenden Stroms (14) einem Fest-Fest-Trennschritt (26), um einen entsorgbaren Gipsstrom (30) und einen getrennten Aluminiumtrihydoxidstrom (28) zu produzieren,
Verwenden des getrennten Aluminiumtrihydoxidstroms (28) zum Entfernen von Sulfat aus einem extern eingeleiteten sulfathaltigen Strom (18(3)) ohne Störung durch aus dem Aluminiumsulfat (16) abgeleitetes Sulfat, das im Hydrolyseschritt (12) als Aluminiumquelle benutzt wird, und
Bilden von Ettringit (32) durch Erhöhen des pH-Wertes des getrennten Aluminiumtrihydroxidstroms (28).

2. Verfahren nach Anspruch 1, wobei der Ettringit einem Flüssig-Flüssig-Trennschritt (42) unterzogen wird, um eine wässrige Phase (36) zu dekantieren,
Unterziehen der wässrigen Phase einer Karbonisierung (46) durch Kohlendioxid, um einen resultierenden Strom zu produzieren, und
Unterziehen des resultierenden Stroms einem Flüssig-Fest-Trennschritt (50), um Restcalcium und Calcit zu entfernen, um ein Produktwasser (54) zu erhalten.

## Revendications

1. Procédé de traitement d'un flux contenant un sulfate (18) comprenant du sulfate d'aluminium (16), comportant les étapes qui consistent à hydrolyser (12) le sulfate d'aluminium, à un pH inférieur à 8,5 et supérieur à 3,5, pour produire un trihydroxyde d'aluminium chimiquement réactif et de l'acide sulfurique, ajouter une quantité de chaux (22) qui est stoechiométriquement suffisante pour immobiliser le sulfate introduit par le sulfate d'aluminium sous forme de gypse, soumettre le flux résultant (14) à une étape de séparation solide-solide (26) pour produire un flux de gypse jetable (30) et un flux de trihydroxyde d'aluminium séparé (28), utiliser le flux de trihydroxyde d'aluminium séparé (28) pour éliminer le sulfate d'un flux contenant un sulfate introduit de l'extérieur (18(3)) sans interférence du sulfate dérivé du sulfate d'aluminium (16) utilisé comme source d'aluminium dans l'étape d'hydrolyse (12), et former de l'ettringite (32) en élevant le pH du flux de trihydroxyde d'aluminium séparé (28).

2. Procédé selon la revendication 1, dans lequel l'ettringite est soumise à une étape de séparation liquide-solide (42) pour décanter une phase aqueuse (36), en soumettant la phase aqueuse à une carbonatation (46) par du dioxyde de carbone pour produire un flux résultant, et en soumettant le flux résultant à une étape de séparation liquide-solide (50) pour éliminer le calcium et la calcite résiduels afin de produire une fraction aqueuse (54).
